# FASCICULE DE BREVET EUROPEEN

(11) **EP 3 463 736 B1**
(45) Date de publication et mention de la délivrance du brevet: **04.11.2020**
(21) Numéro de dépôt: 17729186.1
(22) Date de dépôt: 22.05.2017
(51) Int. Cl.: B23K 15/00, B23K 31/02, B64D 29/06, F01D 9/04, F01D 25/16, B23K 101/00

(54) **PROCEDE DE FABRICATION D'UN CARTER D'ECHAPPEMENT DE TURBOMACHINE A PARTIR DE SEGMENTS RELIES ENTRE EUX PAR SOUDAGE**
VERFAHREN ZUR HERSTELLUNG EINES TURBOMASCHINENABGASGEHÄUSES AUS ZUSAMMENGESCHWEISSTEN SEGMENTEN
METHOD FOR MANUFACTURING A TURBOMACHINE EXHAUST CASING FROM SEGMENTS WELDED TOGETHER

(30) Priorité: 26.05.2016 FR 1654735
(43) Date de publication de la demande: 10.04.2019
(73) Titulaire: Safran Aircraft Engines, 75015 Paris (FR)
(72) Inventeur: DEBRAY, Benoit, Argémiro, Matthieu, 77550 MOISSY-CRAMAYEL (FR); FOUQUET, Dominique, Michel, 77550 MOISSY-CRAMAYEL (FR); GHOSAROSSIAN-PRILLIEUX, Grégory, 77550 MOISSY-CRAMAYEL (FR); SEVI, Guillaume, 77550 MOISSY-CRAMAYEL (FR); SULTANA, Patrick, 77550 MOISSY-CRAMAYEL (FR); VIEILLEFOND, Guy, 77550 MOISSY-CRAMAYEL (FR)
(74) Mandataire: Gevers & Orès
(86) Numéro de dépôt international: PCT/FR2017/051260
(87) Numéro de publication internationale: WO 2017/203151

(56) Documents cités:
- FR-A1- 2 933 130
- US-A- 3 617 685
- US-A1- 2002 044 868
- US-A1- 2014 112 772

## Description

### DOMAINE TECHNIQUE

La présente invention concerne un procédé de fabrication d'un carter d'échappement ou intermédiaire pour une turbomachine d'aéronef.

### ETAT DE L'ART

L'état de l'art comprend notamment les documents US-A1-2002/044868, FR-A1-2 933 130, US-A1-3,617,685 et US-A1. -2014/112772 (base pour le préambule de la revendication 1).

De façon connue, un carter d'échappement de turbomachine comprend un moyeu intérieur et une virole annulaire extérieure s'étendant autour du moyeu et d'un axe de révolution. La virole est configurée pour définir avec le moyeu une veine annulaire d'écoulement d'un flux de gaz et est reliée rigidement au moyeu par des bras sensiblement radiaux par rapport à l'axe précité.

Un carter d'échappement est monté en aval (par référence à l'écoulement des gaz dans la turbomachine) d'une turbine et le flux de gaz qui traverse le carter d'échappement est donc le flux de gaz de combustion sortant de la turbine.

Une turbomachine peut comprendre d'autres carters similaires tels qu'un carter intermédiaire. Un carter intermédiaire est intercalé entre un compresseur basse pression et un compresseur haute pression de la turbomachine, et est donc traversé par un flux de gaz de compresseur basse pression et destiné à alimenter le compresseur haute pression.

Dans la technique actuelle, un tel carter est fabriqué par assemblage de plusieurs pièces. Le moyeu est réalisé d'une seule pièce de fonderie et les bras et la virole, sectorisée ou non, sont rapportés et fixés sur le moyeu.

Cependant, cette méthode de fabrication n'est pas toujours réalisable en particulier pour l'obtention d'un carter de grand diamètre. Il n'est par exemple pas envisageable ou trop complexe et trop coûteux à réaliser de fabriquer un moyeu de fonderie ayant un diamètre de l'ordre de 1,5 mètre.

La présente invention propose une solution simple, efficace et économique à ce problème.

### EXPOSE DE L'INVENTION

L'invention propose à cet effet un procédé de fabrication d'un carter d'échappement ou intermédiaire tel que défini dans la revendication 1.

L'invention propose une nouvelle façon de fabriquer un carter, en particulier d'échappement, non pas au moyen d'un moyeu initialement monobloc mais d'un moyeu sectorisé, c'est-à-dire formé par assemblage de secteurs. Chaque secteur de moyeu est solidaire d'au moins un bras, et de préférence d'un unique bras, et d'un secteur de virole. L'ensemble formé par un secteur de moyeu, un bras, et un secteur de virole forme un secteur de carter, qui peut être réalisé d'une seule pièce de fonderie. Le fait que les bras soient déjà solidaires des secteurs de virole est particulièrement avantageux car cela évite de devoir prévoir le soudage des bras sur le moyeu, qui est une opération longue et fastidieuse et augmente le risque de défauts de soudure et donc de retouche. Cela évite également le risque de rotation des bras lors du soudage, qui peut entraîner une moins bonne qualité géométrique du carter.

Les secteurs de carter sont disposés circonférentiellement les uns à côté des autres, de façon à ce que chaque secteur de moyeu ait des bords longitudinaux en regard, et à faible distance, de bords longitudinaux de secteurs de moyeu adjacents. Les bords longitudinaux en regard des secteurs de moyeu sont ensuite soudés, de préférence par faisceau d'électrons (FE).

Le procédé selon l'invention peut comprendre une ou plusieurs des caractéristiques ou étapes suivantes, prises isolément les unes des autres ou en combinaison les unes avec les autres :
- au moins certains des secteurs de carter présentent des différences, telles que des étendues circonférentielles de leurs secteurs de virole différentes,
- à l'étape b), au moins certains desdits premiers secteurs de virole ont des bords longitudinaux en regard de bords longitudinaux de premiers secteurs de virole adjacents,
- à l'étape c), lesdits bords longitudinaux en regard desdits premiers secteurs de virole sont soudés,
- à l'étape b), au moins certains desdits premiers secteurs de virole ont des bords longitudinaux à distance circonférentielle de bords longitudinaux de premiers secteurs de virole adjacents,
- au moins certains desdits premiers et/ou seconds secteurs de virole sont formés d'une seule pièce avec une chape,
- au moins certains desdits secteurs de carter ont leurs premiers secteurs de virole qui a une étendue circonférentielle inférieure à celle de leurs secteurs de moyeu,
- le nombre de secteurs de carter est égal au nombre de bras,
- le secteur de carter est formé d'une seule pièce,
- les secteurs de carter sont obtenus de fonderie, et
- ledit moyeu comporte une première paroi annulaire sensiblement cylindrique reliée à une extrémité axiale à une seconde paroi annulaire sensiblement tronconique, des raidisseurs s'étendant entre des surfaces intérieures desdites première et seconde parois et s'étendant sensiblement au droit d'extrémités radialement internes desdits bras, chaque secteur de moyeu comportant au moins un desdits raidisseurs.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique en coupe axiale d'une partie aval de turbomachine, et montre un carter d'échappement,
- la figure 2 est une vue schématique en perspective d'un carter d'échappement, vu de face depuis l'aval,
- la figure 3 est une vue schématique en perspective d'un carter d'échappement selon l'invention, vu de côté depuis l'amont,
- la figure 4 est une vue schématique en perspective du carter d'échappement de la figure 3, vu de face depuis l'aval,
- la figure 5 est une vue schématique en perspective de secteurs de carter du carter d'échappement de la figure 3, et
- la figure 6 est une vue schématique en perspective de secteurs de virole du carter d'échappement de la figure 3.

### DESCRIPTION DETAILLEE

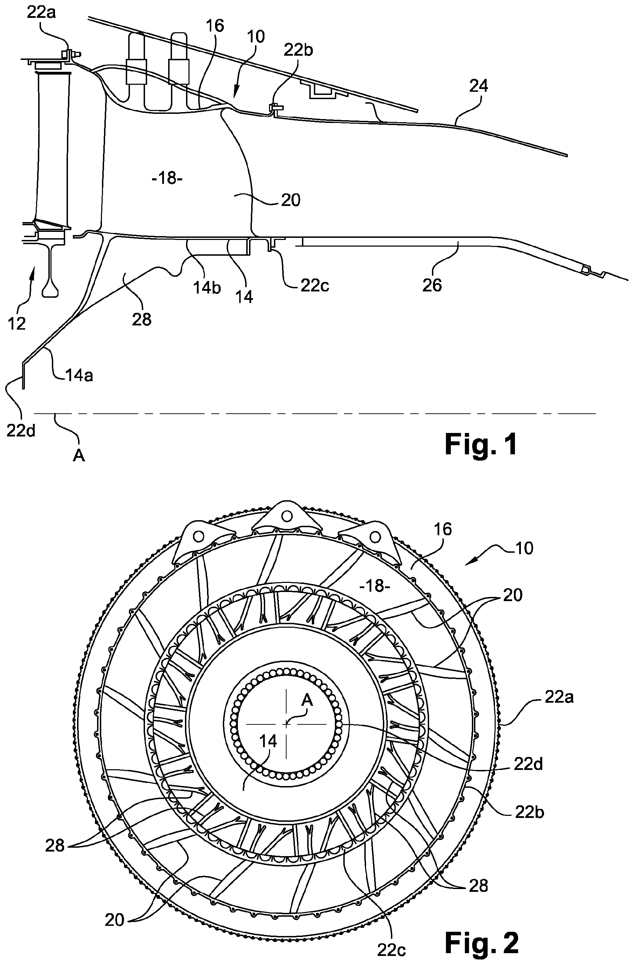

Les figures 1 et 2 représentent un carter 10, ici d'échappement, d'une turbomachine d'aéronef.

De façon classique, une turbomachine comprend un générateur de gaz comportant, d'amont en aval, dans le sens d'écoulement des flux de gaz, au moins un compresseur, une chambre de combustion, et au moins une turbine. En aval de la turbine 12 est situé le carter d'échappement 10 qui comprend pour l'essentiel un moyeu intérieur 14 et une virole annulaire extérieure 16 qui s'étend autour du moyeu et d'un axe A de révolution qui est l'axe longitudinal de la turbomachine.

La virole 16 et le moyeu 14 définissent ensemble une veine annulaire 18 d'écoulement des gaz de combustion sortant de la turbine 12.

La virole 16 et le moyeu 14 sont reliées rigidement l'un à l'autre par des bras 20 sensiblement radiaux par rapport à l'axe A. Les bras 20 peuvent être inclinés par rapport à des plans passant par l'axe A.

Le carter 10 comporte des brides 22a-22d de fixation à d'autres éléments de la turbomachine. Ces brides de fixation sont situées aux extrémités longitudinales amont et aval du carter. Dans l'exemple représenté, la virole 16 comprend une bride annulaire 22a, 22b à chacune de ses extrémités longitudinales amont et aval. La bride amont 22a est fixée à une extrémité aval d'un carter de la turbine 12 et la bride aval 22b est fixée à une extrémité amont d'une tuyère d'échappement 24.

Le moyeu 14 comporte deux parois annulaires respectivement amont 14a et aval 14b. La paroi amont 14a est sensiblement tronconique (divergente d'amont en aval) et la paroi aval 14b est sensiblement cylindrique. Cette paroi aval 14b comporte à son extrémité aval une bride annulaire 22c de fixation à une extrémité amont d'un cône d'échappement 26 entouré par la tuyère 24.

La paroi amont 14a porte à son extrémité amont une bride 22d de fixation à un support de palier

Les surfaces radialement intérieures des parois 14a, 14b du moyeu sont reliées entre elles par des raidisseurs 28 formés ici par des nervures. Comme cela est mieux visible à la figure 2, deux raidisseurs 28 s'étendent sensiblement au droit de l'extrémité radialement interne de chaque bras 20, dans le prolongement radial de ce bras

Dans la technique antérieure, le carter 10 est fabriqué en rapportant et en fixant la virole 16 et les bras 18 sur un moyeu 14 qui est monobloc et réalisé d'une seule pièce, en général de fonderie.

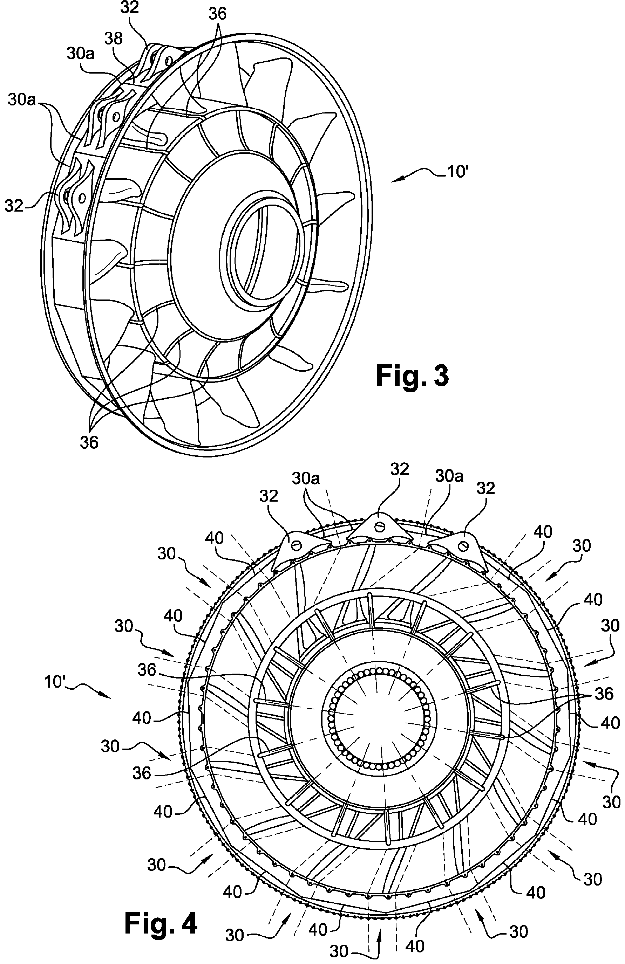

Les figures 3 à 6 illustrent un mode de réalisation de l'invention qui consiste notamment à assembler des secteurs de carter et en particulier des secteurs de moyeu.

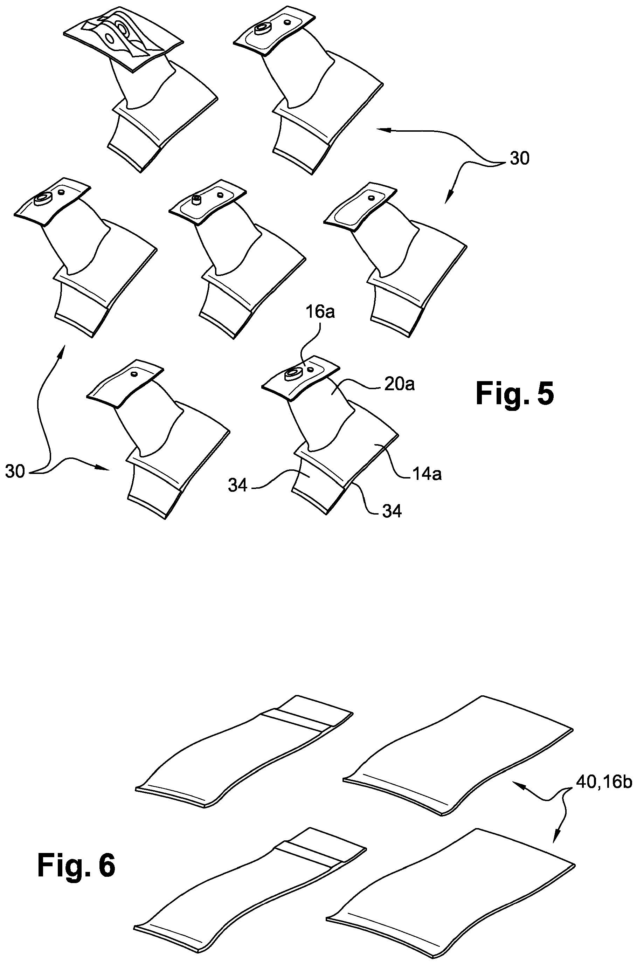

Les figures 3 et 4 montrent un carter 10' selon l'invention assemblé et les figures 5 et 6 montrent des éléments de ce carter 10'.

Le carter 10' est réalisé à partir de secteurs de carter 30 qui sont représentés à la figure 5. Ils sont ici de sept types, tous différents. Ces sept types sont en fait les sept références de secteurs de carter du carter 10'. Autrement dit, le carter 10 peut être obtenu à partir d'un ou plusieurs exemplaires de chaque référence ou type de la figure 5.

Dans l'exemple représenté, le carter 10' comprend quatorze secteurs de carter 30. A titre d'exemple, le carter comprend trois secteurs de carter référencés 30a. Comme on le verra dans ce qui suit, ces secteurs de carter 30a diffèrent des autres par le fait qu'ils comprennent des chapes 32.

Chaque secteur de carter 30 comporte un secteur de moyeu 14a, un secteur de virole 16a et au moins un bras 20a reliant les secteurs de moyeu et de virole (figure 5). Dans l'exemple représenté, chaque secteur de carter 30 comprend un unique bras 20a. Chaque secteur de moyeu 14a peut comprendre un ou des raidisseurs 28 sur sa surface radialement interne, comme évoqué dans ce qui précède (figure 4).

On comprend ainsi que le nombre de secteurs de carter 30 est ici égal au nombre de bras 20a, à savoir quatorze dans l'exemple représenté.

Chaque secteur de carter 30 est de préférence réalisé de fonderie, indépendamment des autres secteurs de carter 30. Les secteurs de carter 30a sont dans ce cas réalisés d'une seule pièce de fonderie avec leurs chapes 32, qui sont chacune situées sur une surface radialement externe d'un secteur de virole 16a.

Le procédé selon l'invention consiste tout d'abord à disposer les secteurs de carter 30 circonférentiellement les uns à côté des autres, de façon à ce que chaque secteur de moyeu 14a ait des bords longitudinaux 34 en regard, et à faible distance circonférentielle, de bords longitudinaux de secteurs de moyeu 14a adjacents, et souder ces bords longitudinaux en regard des secteurs de moyeu (figure 5). On obtient ainsi des cordons de soudure 36 s'étendant le long des bords longitudinaux des secteurs de carter 30 (figures 3 et 4).

On constate dans l'exemple représenté que certains secteurs de carter 30 ont leurs secteurs de virole 16a qui ont des étendues circonférentielles (étendues angulaires) inférieures à celles des secteurs de moyeu 14a de ces secteurs de carter. Ce n'est pas le cas de tous les secteurs de carter.

Les secteurs de carter 30a équipés de chapes 32 ont leurs secteurs de virole 16a qui ont des dimensions circonférentielles telles que leurs bords longitudinaux 36 adjacents sont en regard et à proximité les uns des autres et peuvent être soudés les uns aux autres. On obtient ainsi des cordons de soudure 38 s'étendant le long des bords longitudinaux des secteurs de virole 16a (figure 3).

Les autres secteurs de carter 30 ont leurs secteurs de virole 16a dont les bords longitudinaux sont séparés par des espaces circonférentiels des bords longitudinaux des secteurs de virole des autres secteurs de carter. Ces espaces circonférentiels sont comblés par des panneaux 40 formant d'autres secteurs de virole 16b, qui sont rapportés entre deux secteurs de virole 16a appartenant à des secteurs de carter 30 (figures 4 et 6). Les panneaux 40 permettent lors de l'assemblage de récupérer/ajuster un certain nombre de défauts géométriques qui pourraient être présents sur les secteurs de carter 30, en particulier lorsqu'ils sont obtenus de fonderie.

Dans l'exemple représenté, le carter 10' comprend douze panneaux 40 de quatre types ou références différents, représentés à la figure 6. Les références diffèrent les unes des autres par leur étendue circonférentielle notamment voire également par leur épaisseur (l'épaisseur d'un panneau pouvant ne pas être constante). Elles dépendent donc des espaces circonférentiels précités à combler.

La figure 4 permet de visualiser les différents éléments composant le carter 10', ces différents éléments étant séparés par des traits pointillés. Le soudage des bords longitudinaux des secteurs de moyeu 14a et des secteurs de virole 16a, 16b peut être réalisé par la technique de soudage FE. Les cordons de soudure 36, 38 et 40 séparent les différents éléments du carter 10', comme évoqué dans ce qui précède.

L'invention permet de simplifier de manière significative la fabrication d'un carter à bras tel qu'un carter d'échappement car la fabrication d'une seule pièce de chaque secteur de carter, par exemple de fonderie, est plus simple à réaliser que la fabrication d'une seule pièce d'un moyeu de grand diamètre.

## Revendications

1. Procédé de fabrication d'un carter (10') d'échappement ou intermédiaire pour une turbomachine,
ledit carter comprenant un moyeu intérieur (14) et une virole annulaire extérieure (16) s'étendant autour du moyeu et d'un axe (A) de révolution, ladite virole étant configurée pour définir avec le moyeu une veine annulaire (18) d'écoulement d'un flux de gaz et étant reliée rigidement au moyeu par des bras (20),
**caractérisé en ce qu'**il comprend les étapes consistant à :
a) réaliser des secteurs de carter (30), chaque secteur de carter comportant un secteur de moyeu (14a), un premier secteur de virole (16a) et au moins un bras (20) reliant lesdits secteurs de moyeu et de virole,
b) disposer lesdits secteurs de carter circonférentiellement les uns à côté des autres par rapport audit axe (A), de façon à ce que chaque secteur de moyeu ait des bords longitudinaux (34) en regard de bords longitudinaux de secteurs de moyeu adjacents, et
c) souder lesdits bords longitudinaux en regard desdits secteurs de moyeu,
dans lequel, à l'étape b), au moins certains desdits premiers secteurs de virole (16a) ont des bords longitudinaux à distance circonférentielle de bords longitudinaux de premiers secteurs de virole adjacents, et le procédé comprend, après l'étape c), une étape d) supplémentaire consistant à rapporter et souder des seconds secteurs de virole (16b) entre lesdits bords longitudinaux à distance desdits premiers secteurs de virole.

2. Procédé selon la revendication précédente, dans lequel, à l'étape b), au moins certains desdits premiers secteurs de virole (16a) ont des bords longitudinaux en regard de bords longitudinaux de premiers secteurs de virole adjacents, et, à l'étape c), lesdits bords longitudinaux en regard desdits premiers secteurs de virole sont soudés.

3. Procédé selon l'une des revendications précédentes, dans lequel au moins certains desdits premiers et/ou seconds secteurs de virole (16a, 16b) sont formés d'une seule pièce avec une chape (32).

4. Procédé selon l'une des revendications précédentes, dans lequel au moins certains desdits secteurs de carter (30) ont leurs premiers secteurs de virole (16a) qui a une étendue circonférentielle inférieure à celle de leurs secteurs de moyeu (14a).

5. Procédé selon l'une des revendications précédentes, dans lequel le nombre de secteurs de carter (30) est égal au nombre de bras (20).

6. Procédé selon l'une des revendications précédentes, dans lequel les secteurs de carter (30) sont obtenus de fonderie.

7. Procédé selon l'une des revendications précédentes, dans lequel ledit moyeu (14) comporte une première paroi annulaire (14b) sensiblement cylindrique reliée à une extrémité axiale à une seconde paroi annulaire (14a) sensiblement tronconique, des raidisseurs (28) s'étendant entre des surfaces intérieures desdites première et seconde parois et s'étendant sensiblement au droit d'extrémités radialement internes desdits bras, chaque secteur de moyeu (14a) comportant au moins un desdits raidisseurs.

## Patentansprüche

1. Verfahren zur Herstellung eines Abgasgehäuses (10') oder eines Zwischengehäuses für eine Turbomaschine,
wobei das Gehäuse eine Innennabe (14) und einen ringförmigen Außenmantel (16) umfasst, der sich um die Nabe und eine Drehachse (A) erstreckt, wobei der Mantel konfiguriert ist, um mit der Nabe einen ringförmigen Strom (18) zum Strömen eines Gasdurchflusses zu definieren, und mit der Nabe durch Arme (20) starr verbunden ist,
**dadurch gekennzeichnet, dass** es die Schritte umfasst, die in Folgendem bestehen:
a) Fertigen von Gehäusesektoren (30), wobei jeder Gehäusesektor einen Nabensektor (14a), einen ersten Mantelsektor (16a) und mindestens einen Arm (20) beinhaltet, der den Naben- und den Mantelsektor verbindet,
b) Anordnen der Gehäusesektoren umlaufend nebeneinander in Bezug auf die Achse (A), sodass jeder Nabensektor Längsränder (34) gegenüber Längsrändern von angrenzenden Nabensektoren aufweist, und
c) Verschweißen der Längsränder gegenüber den Nabensektoren,
wobei in Schritt b) mindestens manche der ersten Mantelsektoren (16a) Längsränder umlaufend beabstandet von Längsrändern von angrenzenden ersten Mantelsektoren aufweisen, und das Verfahren nach Schritt c) einen zusätzlichen Schritt d) umfasst, der darin besteht, zweite Mantelsektoren (16b) zwischen den beabstandeten Längsrändern der ersten Mantelsektoren anzubringen und zu verschweißen.

2. Verfahren nach dem vorstehenden Anspruch, wobei in Schritt b) mindestens manche der ersten Mantelsektoren (16a) Längsränder gegenüber Längsrändern von angrenzenden ersten Mantelsektoren aufweisen, und in Schritt c) die Längsränder gegenüber den ersten Mantelsektoren verschweißt werden.

3. Verfahren nach einem der vorstehenden Ansprüche, wobei mindestens manche der ersten und/oder zweiten Mantelsektoren (16a, 16b) aus einem Stück mit einer Abdeckung (32) gebildet werden.

4. Verfahren nach einem der vorstehenden Ansprüche, wobei mindestens manche der Gehäusesektoren (30) ihre ersten Mantelsektoren (16a) aufweisen, die eine umlaufende Ausdehnung aufweisen, die geringer ist als jene ihrer Nabensektoren (14a).

5. Verfahren nach einem der vorstehenden Ansprüche, wobei die Anzahl der Gehäusesektoren (30) gleich der Anzahl der Arme (20) ist.

6. Verfahren nach einem der vorstehenden Ansprüche, wobei die Gehäusesektoren (30) durch Gießen erhalten werden.

7. Verfahren nach einem der vorstehenden Ansprüche, wobei die Nabe (14) eine im Wesentlichen zylindrische, erste ringförmige Wand (14b) beinhaltet, die an einem axialen Ende mit einer im Wesentlichen kegelstumpfförmigen, zweiten ringförmigen Wand (14a) verbunden ist, wobei sich Versteifungen (28) zwischen den Innenflächen dieser ersten und zweiten Wand erstrecken und sich im Wesentlichen lotrecht zu den radial inneren Enden der Arme erstrecken, wobei jeder Nabensektor (14a) mindestens eine der Versteifungen beinhaltet.

## Claims

1. Method for manufacturing an intermediate or exhaust casing (10') for a turbomachine,
said casing comprising an inner hub (14) and an outer annular ferrule (16) extending around the hub and of an axis (A) of rotation, said ferrule being configured to define with the hub, an annular flow path (18) for a gas stream and being rigidly linked to the hub by arms (20),
**characterised in that** it comprises steps consisting of:
a) producing casing sectors (30), each casing sector comprising a hub sector (14a), a first ferrule sector (16a) and at least one arm (20) linking said hub and ferrule sectors,
b) arranging said casing sectors circumferentially next to each other with respect to said axis (A), such that each hub sector has longitudinal edges (34) facing longitudinal edges of adjacent hub sectors, and
c) welding said longitudinal edges facing said hub sectors,
wherein, in step b), at least some of said first ferrule sectors (16a) have longitudinal edges at a circumferential distance of longitudinal edges of first adjacent ferrule sectors, and the method comprises, after step c), an additional step d) consisting of adding and welding second ferrule sectors (16b) between said longitudinal edges at a distance from said first ferrule sectors.

2. Method according to the preceding claim, wherein, in step b), at least some of said first ferrule sectors (16a) have longitudinal edges facing longitudinal edges of first adjacent ferrule sectors, and, in step c), said longitudinal edges facing said first ferrule sectors are welded.

3. Method according to one of the preceding claims, wherein at least some of said first and/or second ferrule sectors (16a, 16b) are formed form one single part with a tread (32).

4. Method according to one of the preceding claims, wherein at least some of said casing sectors (30) have their first ferrule sectors (16a) which has a circumferential extent less than that of their hub sectors (14a).

5. Method according to one of the preceding claims, wherein the number of casing sectors (30) is equal to the number of arms (20).

6. Method according to one of the preceding claims, wherein the casing sectors (30) are obtained by casting.

7. Method according to one of the preceding claims, wherein said hub (14) comprises a first substantially cylindrical annular wall (14b) linked to an axial end to a second substantially frustoconical annular wall (14a), stiffeners (28) extending between the lower surfaces of said first and second walls and extending substantially to the right of radially inner ends of said arms, each hub sector (14a) comprising at least one of said stiffeners.
